# EUROPEAN PATENT APPLICATION

(11) **EP 4 501 635 A1**
(43) Date of publication of application: **05.02.2025**
(21) Application number: 23803447.4
(22) Date of filing: 26.04.2023
(51) Int. Cl.: B32B 27/32, B32B 27/20, B65D 65/40, C08K 3/22, C08L 23/16, C08L 53/00

(54) **MULTILAYER FILM, PACKAGING MATERIAL, AND PACKAGE**

(30) Priority: 11.05.2022 JP 2022078125; 26.08.2022 JP 2022134774
(71) Applicant: Toppan Holdings Inc., Tokyo 110-0016 (JP)
(72) Inventor: TANAKA Ryo, Tokyo 110-0016 (JP); KATSUME Tomoya, Tokyo 110-0016 (JP)
(74) Representative: TBK
(86) International application number: PCT/JP2023/016504
(87) International publication number: WO 2023/218968

(57) **Abstract**

A multilayer film including a heat seal layer and a concealing layer provided on the heat seal layer, in which the heat seal layer contains a propylene homopolymer (A) and/or a propylene-based copolymer resin (B), the concealing layer contains a propylene-ethylene block copolymer resin (C), an ethylene-propylene copolymer elastomer (D), and titanium oxide (E), and a content of the titanium oxide (E) in the concealing layer is 0.10% to 30.00% by mass based on a total mass of the concealing layer.

## Description

### Technical Field

The present disclosure relates to a multilayer film, a packaging material, and a package.

### Background Art

Polypropylene-based films have excellent rigidity and heat resistance while being inexpensive, and therefore, polypropylene-based films are sometimes used as sealant films for various materials for packaging such as food packaging.

In Patent Literature 1, a polypropylene-based composite film composed of three layers, in which the intermediate layer is made of a propylene-ethylene block copolymer resin, and both surface layers are made of a propylene-based random copolymer, has been proposed.

### Citation List

### Patent Literature

Patent Literature 1: Japanese Unexamined Patent Publication No. 2017-132186

### Summary of Invention

### Technical Problem

Polypropylene-based films used in sealant films are required to have heat sealability as well as cold impact resistance that prevents bag breaking even during low-temperature storage. Furthermore, materials other than sealant films, such as an aluminum base material, have been conventionally used in order to impart concealing properties to the packaging material; however, if it were possible to impart a concealing function to sealant films, diversification of packaging materials would be promoted.

In order to impart a concealing function to a film, it is conceivable to blend a pigment such as titanium oxide. However, since addition of a pigment may be a causative factor of deterioration of cold impact resistance, it is not easy to achieve both concealing properties and cold impact resistance.

Thus, an object of one aspect of the present disclosure is to provide a multilayer film that can be used as a sealant film and has excellent cold impact resistance while having sufficient concealing properties. Furthermore, an object of another aspect of the present disclosure is to provide a packaging material including the above-described multilayer film, and a package produced into a bag from the packaging material.

### Solution to Problem

Some aspects of the present disclosure provide the following [1] to [15].
[1] A multilayer film comprising:
   a heat seal layer; and
   a concealing layer provided on the heat seal layer,
   wherein the heat seal layer contains a propylene homopolymer (A) and/or a propylene-based copolymer resin (B),
   the concealing layer contains a propylene-ethylene block copolymer resin (C), an ethylene-propylene copolymer elastomer (D), and titanium oxide (E), and
   a content of the titanium oxide (E) in the concealing layer is 0.10% to 30.00% by mass based on a total mass of the concealing layer.
[2] The multilayer film according to [1],
   wherein the heat seal layer contains a propylene-based copolymer resin (B), and
   the propylene-based copolymer resin (B) has a melting point of 132°C to 150°C.
[3] The multilayer film according to [1] or [2],
   wherein the heat seal layer contains a propylene-based copolymer resin (B), and
   an ethylene content in the propylene-based copolymer resin (B) is 3.0% to 6.0% by mass based on a total mass of the propylene-based copolymer resin (B).
[4] The multilayer film according to any one of [1] to [3],
   wherein a content of the propylene homopolymer (A) in the heat seal layer is 10% to 70% by mass based on a total mass of the heat seal layer, and
   a content of the propylene-based copolymer resin (B) in the heat seal layer is 30% to 90% by mass based on the total mass of the heat seal layer.
[5] The multilayer film according to any one of [1] to [4],
   wherein a mass ratio of a content of the propylene-based copolymer resin (B) with respect to a content of the propylene homopolymer (A) in the heat seal layer is 0.10 to 9.00.
[6] The multilayer film according to any one of [1] to [5],
   wherein a content of the propylene-ethylene block copolymer resin (C) in the concealing layer is 35% to 90% by mass based on a total mass of the concealing layer, and
   a content of the ethylene-propylene copolymer elastomer (D) in the concealing layer is 10% to 50% by mass based on the total mass of the concealing layer.
[7] The multilayer film according to any one of [1] to [6],
   wherein a mass ratio of a content of the ethylene-propylene copolymer elastomer (D) with respect to a content of the propylene-ethylene block copolymer resin (C) in the concealing layer is 0.10 to 1.00.
[8] The multilayer film according to any one of [1] to [7],
   wherein a propylene content is 70% by mass or more based on a total mass of the multilayer film.
[9] The multilayer film according to any one of [1] to [8],
   wherein a thickness of the heat seal layer is 8% to 30% based on a thickness of the multilayer film.
[10] The multilayer film according to any one of [1] to [9],
   wherein a thickness of the concealing layer is 20 µm or more.
[11] The multilayer film according to any one of [1] to [10],
   wherein the multilayer film comprises the heat seal layer, the concealing layer, and a laminate layer in this order, and
   the laminate layer contains a propylene homopolymer (A) and/or a propylene-based copolymer resin (B).
[12] The multilayer film according to [11],
   wherein a total thickness of the heat seal layer and the laminate layer is 16% to 42% based on a thickness of the multilayer film.
[13] A packaging material comprising the multilayer film according to any one of [1] to [12].
[14] The packaging material according to [13], further comprising a biaxially stretched polypropylene film on an opposite side of the heat seal layer side as viewed from the concealing layer of the multilayer film.
[15] A package produced into a bag from the packaging material according to [13] or [14].

### Advantageous Effects of Invention

According to an aspect of the present disclosure, a multilayer film that can be used as a sealant film and has excellent cold impact resistance while having sufficient concealing properties, can be provided. Furthermore, according to another aspect of the present disclosure, a packaging material including the above-described multilayer film, and a package produced into a bag from the packaging material, can be provided.

### Brief Description of Drawings

[FIG. 1] FIG. 1 is a schematic cross-sectional view illustrating one embodiment of a multilayer film of the present disclosure.
[FIG. 2] FIG. 2 is a schematic cross-sectional view illustrating another embodiment of the multilayer film of the present disclosure.
[FIG. 3] FIG. 3 is a schematic cross-sectional view illustrating one embodiment of a packaging material of the present disclosure.
[FIG. 4] FIG. 4 is a schematic cross-sectional view illustrating another embodiment of the packaging material of the present disclosure.

### Description of Embodiments

In the present specification, a numerical value range indicated using the term "to" represents a range including the numerical values described before and after the term "to" as the minimum value and the maximum value, respectively. Furthermore, unless specifically stated otherwise, the units of the numerical values described before and after the term "to" are the same. With regard to a numerical value range described stepwise in the present specification, the upper limit value or the lower limit value of a numerical value range of a certain stage may be replaced with the upper limit value or the lower limit value of a numerical value range of another stage. Furthermore, with regard to a numerical value range described in the present specification, the upper limit value or the lower limit value of the numerical value range may be replaced with a value indicated in the Examples. The upper limit values and the lower limit values described individually can be combined in any desired manner. Furthermore, the route of obtaining polymerization raw materials of resins (a propylene homopolymer (A), a propylene-based copolymer resin (B), a propylene-ethylene block copolymer resin (C), and an ethylene-propylene copolymer elastomer (D)) in the present specification is not particularly limited, and resins derived from any raw materials such as conventional components refined from petroleum, components produced by chemical recycling methods, and plant-derived components, can also be used.

### <Multilayer film>

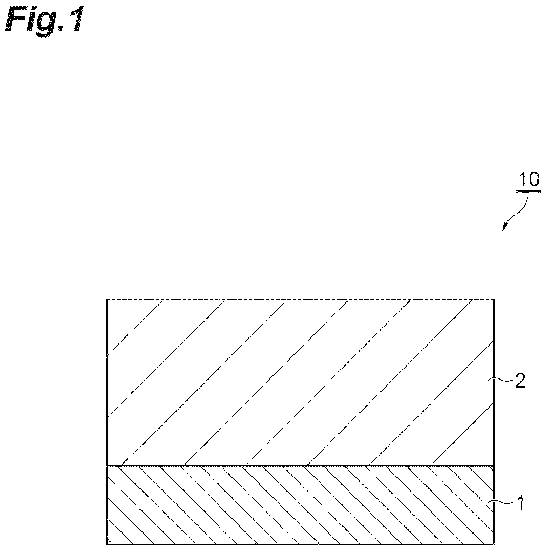

FIG. 1 is a cross-sectional view of a multilayer film according to one embodiment of the present disclosure. A multilayer film 10 includes a heat seal layer 1, and a concealing layer 2 provided on the heat seal layer 1. The heat seal layer contains a propylene homopolymer (A) and/or a propylene-based copolymer resin (B), and the concealing layer 2 contains a propylene-ethylene block copolymer (C), an ethylene-propylene copolymer elastomer (D), and titanium oxide (E). The content of titanium oxide (E) in the concealing layer 2 is 0.10% to 30.00% by mass based on the total mass of the concealing layer 2.

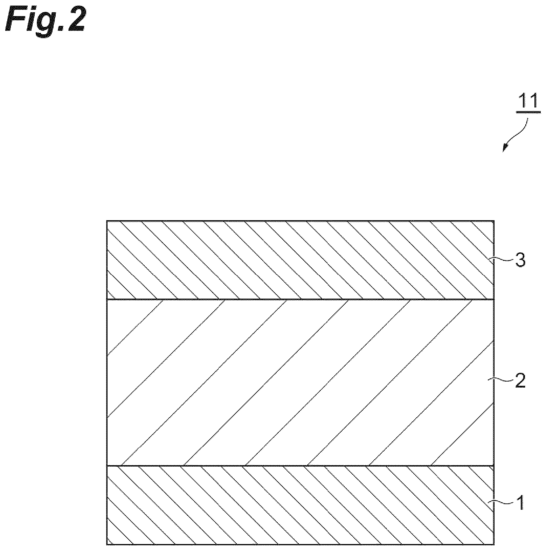

FIG. 2 is a cross-sectional view of a multilayer film according to another embodiment of the present disclosure. A multilayer film 11 includes a heat seal layer 1, a concealing layer 2, and a laminate layer 3 in this order. The heat seal layer 1 and the concealing layer 2 are the same as the heat seal layer 1 and the concealing layer 2 in the multilayer film 10. The laminate layer 3 contains a propylene homopolymer (A) and/or a propylene-based copolymer resin (B).

The above-described multilayer films (10, 11) can be used as sealant films (for example, a polypropylene-based unstretched sealant film) and have excellent cold impact resistance while having sufficient concealing properties. Therefore, the multilayer films (10, 11) are suitably used as packaging materials (for example, a sealant film for packaging, or a packaging film including a sealant film for packaging and a base material). The multilayer films (10, 11) may be used as single films, or may be laminated with a base material and used. When the multilayer films (10, 11) are used as a packaging material, the method of using the multilayer films as a packaging material is not particularly limited.

The cold impact resistance of the multilayer films (10, 11) can be evaluated based on the impact strength during low-temperature storage of the films. Specifically, the impact strength of the film is measured using a film impact tester under the conditions of a temperature of -5°C, a weight of 1.5 J, and a bullet size of 1/2 inches. The impact strength of the film measured under the above-described conditions is, for example, 6.00 J/mm or greater (for example, 6.00 J/mm to 12.00 J/mm), and the impact strength can be 7.00 J/mm or greater, 8.00 J/mm or greater, 9.00 J/mm or greater, 10.00 J/mm or greater, or 11.00 J/mm or greater, by adjusting the composition and thickness of each layer.

The concealing properties of the multilayer films (10, 11) can be evaluated based on the transmission density. The transmission density is the common logarithm of the reciprocal of the transmittance and can be measured using a transmission densitometer (for example, a portable transmission densitometer manufactured by X-Rite, Incorporated). The transmission density of the multilayer films (10, 11) is, for example, 0.20 or greater (for example, 0.20 to 0.80), and can be 0.30 or greater, 0.40 or greater, 0.50 or greater, 0.60 or greater, or 0.70 or greater, by adjusting the composition and thickness of each layer.

However, in the field of packaging materials for foods and the like, efforts are underway to constitute a packaging material from a single material, which is called "mono-materialization". Since the above-described multilayer films have sufficient concealing properties even without containing a non-polypropylene-based material such as an aluminum base material that is conventionally used to impart concealing properties to packaging materials, the multilayer films are suitably used particularly for mono-material packaging materials, which require concealing properties.

With regard to the efforts for mono-materialization, as the sealant film and the base material are constructed from the same material, the melting point of the sealant film and the melting point of the base material are inevitably close to each other, and the base material is likely to melt together with the sealant film in the heat-sealing process. For that reason, those sealant films used for mono-material packaging materials are sometimes required to have excellent low-temperature heatsealability (hereinafter, also referred to as "low-temperature sealability"). In this regard, the above-described multilayer films also have low-temperature sealability since a low-melting point material (for example, a propylene-based copolymer resin (B) having a melting point of 150°C or lower) is used as the material for the heat seal layer.

Each layer of the above-described multilayer films (10, 11) will be described in detail below. In the following description, reference numerals will be omitted.

### (Heat seal layer)

The heat seal layer contains, for example, a propylene homopolymer (A) and/or a propylene-based copolymer resin (B).

### [Propylene homopolymer (A))

The propylene homopolymer (A) is a homopolymer of propylene obtained by a method of homopolymerizing propylene using, for example, a Ziegler-Natta type catalyst, a metallocene catalyst, or a halfmetallocene catalyst. When the heat seal layer contains a propylene homopolymer (A), the multilayer film is also excellent in terms of heat resistance that can withstand a retort treatment or the like in which a pressurization treatment is performed at a high temperature of 120°C to 135°C to perform sterilization and disinfection (hereinafter, also simply referred to as "heat resistance"). Therefore, it can be said that a multilayer film including a heat seal layer containing the propylene homopolymer (A) can be suitably used for packaging material use applications that are subjected to severe treatments such as a boiling water treatment and a retort treatment.

Regarding the propylene homopolymer (A), for example, one having a melting start temperature of 150°C or higher and a melting point (melting peak temperature) of 155°C or higher may be used. A material having both the melting start temperature and the melting point within these ranges has more excellent heat resistance, and for example, after a retort treatment is performed at a high temperature, fusion is less likely to occur on the inner surface of a packaging bag. From the viewpoint of obtaining more excellent heat resistance, the melting start temperature of the propylene homopolymer (A) may be 151°C or higher or 152°C or higher, and the melting point of the propylene homopolymer (A) may be 156°C or higher or 158°C or higher. The melting start temperature of the propylene homopolymer (A) is, for example, 160°C or lower, and from the viewpoint of obtaining more excellent low-temperature sealability, the melting start temperature may be 155°C or lower, or 153°C or lower. The melting point of the propylene homopolymer (A) is, for example, 170°C or lower, and from the viewpoint of obtaining more excellent low-temperature sealability, the melting point may be 165°C or lower, or 160°C or lower. From the above-described viewpoint, the melting start temperature of the propylene homopolymer (A) may be, for example, 150°C to 160°C, and the melting point of the propylene homopolymer (A) may be, for example, 155°C to 170°C. In the present specification, the melting start temperature and the melting point are values that can be determined by performing differential scanning calorimetry according to JIS K 7121.

As the propylene homopolymer (A), one having a melt flow rate (MFR) in the range of 2.0 g/10 minutes to 7.0 g/10 minutes may be used. When the melt flow rate is equal to or greater than the above-described lower limit value, the load on the extruder during molding processing is small, the processing speed is less likely to decrease, and excellent productivity is likely to be maintained. Furthermore, when the melt flow rate is equal to or less than the above-described upper limit value, the heat seal layer is likely to have more excellent cold impact resistance. From these viewpoints, the melt flow rate of the propylene homopolymer (A) may be 2.5 g/10 minutes to 6.0 g/10 minutes, or 3.0 g/10 minutes to 5.0 g/10 minutes. In the present specification, the melt flow rate is a value measured according to ISO 1133 under the conditions of a temperature of 230°C and a load of 2.16 kg.

### [Propylene-based copolymer resin (B)]

The propylene-based copolymer resin (B) is a resin obtained by copolymerization of propylene and another copolymerizing monomer (comonomer).

The propylene-based copolymer resin (B) may have a melting point lower than the propylene homopolymer (A). The melting point of the propylene-based copolymer resin (B) is preferably 150°C or lower. When the heat seal layer includes a propylene-based resin having such a melting point, the multilayer film has excellent low-temperature sealability. Such a multilayer film is more suitably used as a sealant film for a mono-material packaging material. From the viewpoint of having more excellent heat resistance and cold impact resistance, the melting point of the propylene-based copolymer resin (B) may be 132°C or higher, 135°C or higher, 140°C or higher, or 145°C or higher. From the above-described viewpoints, the melting point of the propylene-based copolymer resin (B) may be, for example, 132°C to 150°C, 135°C to 150°C, 140°C to 150°C, or 145°C to 150°C. From the viewpoint of achieving heat resistance and low-temperature sealability in a more balanced manner, the melting start temperature of the propylene-based copolymer resin (B) may be 120°C to 145°C, 125°C to 145°C, or 135°C to 145°C. The melting point of the propylene-based copolymer resin (B) after the formation of the heat seal layer can be determined by separating the heat seal layer by, for example, a high-temperature LC method in which graphite carbon is used as an adsorbent material, and measuring the melting point of each layer.

The propylene-based copolymer resin (B) may be a resin obtained by copolymerization of propylene and a copolymerizing monomer including ethylene (resin including a copolymer of propylene and ethylene). From the viewpoint that the multilayer film has more excellent low-temperature sealability, the propylene-based copolymer resin (B) may include a propylene-ethylene random copolymer. The propylene-ethylene random copolymer is obtained by adding ethylene as a comonomer into a main monomer composed of propylene, and copolymerizing these monomers using, for example, a Ziegler-Natta type catalyst, a metallocene catalyst, or a half metallocene catalyst. The copolymer constituting the propylene-based copolymer resin (B) may be one kind of copolymer or a plurality of kinds of copolymers. When the propylene-based copolymer resin (B) is a mixture of a plurality of kinds of copolymers, the melting point of the mixture is considered as the melting point of the propylene-based copolymer resin (B).

The ethylene content in the propylene-based copolymer resin (B) may be 6.0% by mass or less based on the total mass of the propylene-based copolymer resin (B). When the ethylene content is 6.0% by mass or less, heat resistance does not decrease excessively while maintaining low-temperature sealability, and fusion on the inner surface of a packaging bag after a retort treatment can be suppressed. From the viewpoint of obtaining this effect more notably, the ethylene content may be 5.5% by mass or less, or 4.5% by mass or less. The lower limit of the ethylene content is not particularly limited; however, from the viewpoint of low-temperature sealability, the lower limit can be set to 3.0% by mass. From these viewpoints, the ethylene content in the propylene-based copolymer resin (B) may be 3.0% to 6.0% by mass, or may be 3.0% to 5.5% by mass or 3.0% to 4.5% by mass, based on the total mass of the propylene-based copolymer resin (B).

The ethylene content of the propylene-based copolymer resin (B) can be measured according to an ethylene content quantification method (IR method) described on pages 412 to 413 of Polymer Analysis Handbook (May 10, 2013, 3rd printing) edited by the Polymers Analysis Committee of the Japan Society of Analytical Chemistry.

The melt flow rate (MFR: ISO 1133) (temperature: 230°C, load: 2.16 kg) of the propylene-based copolymer resin (B) may be 1.0 g/10 minutes to 10.0 g/10 minutes. When the melt flow rate is equal to or greater than the above-described lower limit value, the load on the extruder during molding processing is small, the processing speed is less likely to decrease, and excellent productivity is likely to be maintained. When the melt flow rate is equal to or less than the above-described upper limit value, the heat seal layer is likely to have excellent cold impact resistance. From these viewpoints, the melt flow rate of the propylene-based copolymer resin (B) may be 2.0 g/10 minutes to 9.0 g/10 minutes or 3.0 g/10 minutes to 8.0 g/10 minutes.

Thus, each component contained in the heat seal layer has been described; however, the heat seal layer may contain components other than the propylene homopolymer (A) and the propylene-based copolymer resin (B). However, from the viewpoint of use in a mono-material packaging material composed of the same polypropylene-based material, the propylene content in the heat seal layer is preferably 70% by mass or more. The propylene content in the heat seal layer can be measured by Raman spectroscopy.

From the viewpoint of achieving both excellent heat resistance and excellent low-temperature sealability, it is preferable that the heat seal layer contains both a propylene homopolymer (A) and a propylene-based copolymer resin (B), and it is more preferable that the heat seal layer contains a propylene homopolymer (A) and a propylene-based copolymer resin (B) having a melting point of 132°C to 150°C. When the heat seal layer contains both the propylene homopolymer (A) and the propylene-based copolymer resin (B), from the viewpoint of achieving heat resistance and low-temperature sealability in a more balanced manner, it is preferable that the content of the propylene homopolymer (A) in the heat seal layer is set to 10% to 70% by mass based on the total mass of the heat seal layer, and the content of the propylene-based copolymer resin (B) (preferably a propylene-based copolymer resin (B) having a melting point of 132°C to 150°C) in the heat seal layer is set to 30% to 90% by mass based on the total mass of the heat seal layer.

From the viewpoint of having more excellent heat resistance, the content of the propylene homopolymer (A) in the heat seal layer may be 10% by mass or more, 15% by mass or more, 20% by mass or more, 30% by mass or more, 40% by mass or more, or 50% by mass or more, based on the total mass of the heat seal layer. From the viewpoint of having more excellent low-temperature sealability and cold impact resistance, the content of the propylene homopolymer (A) in the heat seal layer may be 70% by mass or less, 65% by mass or less, 60% by mass or less, 55% by mass or less, or 50% by mass or less, based on the total mass of the heat seal layer. From these viewpoints, the content of the propylene homopolymer (A) in the heat seal layer may be 10% to 70% by mass, 15% to 65% by mass, 20% to 60% by mass, 30% to 55% by mass, 40% to 55% by mass, 10% to 50% by mass, or 50% to 70% by mass, based on the total mass of the heat seal layer. From the viewpoint of having more excellent low-temperature sealability, the content of the propylene homopolymer (A) in the heat seal layer may be 75% to 100% by mass based on the total mass of the heat seal layer.

From the viewpoint of having more excellent low-temperature sealability and cold impact resistance, the content of the propylene-based copolymer resin (B) in the heat seal layer may be 30% by mass or more, 35% by mass or more, 40% by mass or more, 45% by mass or more, or 50% by mass or more, based on the total mass of the heat seal layer. From the viewpoint of having more excellent heat resistance, the content of the propylene-based copolymer resin (B) in the heat seal layer may be 90% by mass or less, 85% by mass or less, 80% by mass or less, 70% by mass or less, 60% by mass or less, or 50% by mass or less, based on the total mass of the heat seal layer. From these viewpoints, the content of the propylene-based copolymer resin (B) in the heat seal layer may be 30% to 90% by mass or may be 35% to 85% by mass, 40% to 80% by mass, 45% to 70% by mass, 45% to 60% by mass, 50% to 90% by mass, or 35% to 50% by mass, based on the total mass of the heat seal layer. From the viewpoint of having more excellent low-temperature sealability, the content of the propylene homopolymer (B) in the heat seal layer may be 0% to 25% by mass based on the total mass of the heat seal layer.

The mass ratio [(B)/(A)] of the content of the propylene-based copolymer resin (B) with respect to the content of the propylene homopolymer (A) in the heat seal layer may be 0.10 to 9.00 from the viewpoint of having more excellent heat resistance and cold impact resistance. From the viewpoint of having more excellent heat resistance and cold impact resistance, the mass ratio [(B)/(A)] may be 0.20 or greater, 0.40 or greater, or 0.80 or greater, and may be 5.00 or less, 2.50 or less, or 1.50 or less.

### (Concealing layer)

The concealing layer contains a propylene-ethylene block copolymer resin (C), an ethylene-propylene copolymer elastomer (D), and titanium oxide (E). Since the concealing layer contains 0.10% by mass or more of titanium oxide (E), the multilayer film has concealing properties. Furthermore, since the concealing layer contains the propylene-ethylene block copolymer resin (C) and the ethylene-propylene copolymer elastomer (D) while the content of titanium oxide (E) is suppressed to 30.00% by mass or less, both the concealing properties of the titanium oxide (E) and excellent cold impact resistance can be achieved.

### [Propylene-ethylene block copolymer resin (C)]

The propylene-ethylene block copolymer resin (C) is a resin obtained by block copolymerization of propylene and ethylene.

The propylene-ethylene block copolymer resin (C) includes, for example, a propylene homopolymer component (c1) and an ethylene-propylene copolymer component (c2), which is a copolymer (for example, a random copolymer) of ethylene and propylene. Such a propylene-ethylene block copolymer resin (C) can be obtained by, for example, producing a propylene homopolymer component (c1) in a first step, and then producing an ethylene-propylene copolymer component (c2) by gas phase polymerization in the presence of the propylene homopolymer component (c1) in a second step. In the polymerization, for example, a Ziegler-Natta type catalyst, a metallocene catalyst, and a half metallocene catalyst can be used. It is generally considered that the propylene-ethylene block copolymer resin (C) obtained by this method is not a block copolymer in which a propylene homopolymer end and an ethylene-propylene copolymer end are joined (a block copolymer configured by repetition of a block composed of the propylene homopolymer component (c1) and a block composed of the ethylene-propylene copolymer component (c2)) but is a mixture of the propylene homopolymer component (c1) and the ethylene-propylene copolymer component (c2).

The propylene-ethylene block copolymer resin (C) may include 60.0% to 90.0% by mass of the above-described propylene homopolymer component (c1) and 10.0% to 40.0% by mass of the above-described ethylene-propylene copolymer component (c2) based on the total mass of the propylene-ethylene block copolymer resin (C). As the content of each component is in the above-described range, more excellent cold impact resistance is likely to be obtained. From the above-described viewpoints, the content of the propylene homopolymer component (c1) in the propylene-ethylene block copolymer resin (C) may be 65.0% to 87.5% by mass or may be 70.0% to 85.0% by mass based on the total mass of the propylene-ethylene block copolymer resin (C). Similarly, the content of the ethylene-propylene copolymer component (c2) in the propylene-ethylene block copolymer resin (C) may be 12.5% to 35.0% by mass or may be 15.0% to 30.0% by mass, based on the total mass of the propylene-ethylene block copolymer resin (C).

The ethylene content in the ethylene-propylene copolymer component (c2) may be 20.0% to 40.0% by mass based on the total mass of the ethylene-propylene copolymer component (c2). When the ethylene content is equal to or less than the above-described upper limit value, tackiness of the product can be suppressed, contamination due to tack of the product during production is less likely to occur, and excellent productivity is likely to be maintained. When the ethylene content is equal to or more than the above-described lower limit value, more excellent cold impact resistance is likely to be obtained.

The ethylene content of the ethylene-propylene copolymer component (c2) can be measured by the ethylene content quantification method (IR method) described on pages 412 to 413 of Polymer Analysis Handbook (May 10, 2013, 3rd printing) edited by the Polymers Analysis Committee of the Japan Society of Analytical Chemistry.

As the propylene-ethylene block copolymer resin (C), one having a melt flow rate (MFR: ISO 1133) (temperature: 230°C, load 2.16 kg) in the range of 0.5 g/10 minutes to 2.5 g/10 minutes can be used. When the melt flow rate is equal to or greater than the above-described lower limit value, the load on the extruder during molding processing is small, the processing speed is less likely to decrease, and excellent productivity is likely to be maintained. When the melt flow rate is equal to or less than the above-described upper limit value, the concealing layer is likely to have excellent cold impact resistance. From these viewpoints, the melt flow rate of the propylene-ethylene block copolymer resin (C) may be 1.0 g/10 minutes to 2.2 g/10 minutes or 1.5 g/10 minutes to 2.0 g/10 minutes.

### [Ethylene-propylene copolymer elastomer (D)]

The ethylene-propylene copolymer elastomer (D) is an elastomer obtained by block copolymerization of propylene and ethylene.

The ethylene-propylene copolymer elastomer (D) can be obtained by, for example, a slurry polymerization method performed in the presence of an inert hydrocarbon such as hexane, heptane, or kerosene, or a liquefied α-olefin solvent such as propylene, or a gas phase polymerization method in the absence of a solvent. Specifically, the ethylene-propylene copolymer elastomer (D) can be obtained using a known multistage polymerization method. That is, the ethylene-propylene copolymer elastomer (D) may be a polymerized type high rubber-containing polypropylene-based resin that can be obtained by polymerizing propylene and/or propylene-α-olefin polymer in a first stage reactor and then copolymerizing propylene with an α-olefin in a second stage reactor. For the polymerization, for example, a Ziegler-Natta type catalyst, a metallocene catalyst, or a half metallocene catalyst can be used.

The melt flow rate (MFR: ISO 1133) (temperature: 230°C, load: 2.16 kg) of the ethylene-propylene copolymer elastomer (D) may be 0.5 g/10 minutes to 3.5 g/10 minutes. When the melt flow rate is equal to or greater than the above-described lower limit value, the load on the extruder during molding processing is small, the processing speed is less likely to decrease, and excellent productivity is likely to be maintained. When the melt flow rate is equal to or less than the above-described upper limit value, the compatibility between the propylene-ethylene block copolymer resin (C) and the ethylene-propylene copolymer elastomer (D) is satisfactory, and more excellent cold impact resistance is likely to be obtained.

From the viewpoint of easily obtaining even more excellent cold impact resistance, the mass ratio of the propylene content with respect to the ethylene content [propylene content/ethylene content] in the ethylene-propylene copolymer elastomer (D) may be 1.5 to 4.0 or may be 2.0 to 3.5 or 2.5 to 3.0.

The propylene content of the ethylene-propylene copolymer elastomer (D) can be measured by Raman spectroscopy. Furthermore, the ethylene content of the ethylene-propylene copolymer elastomer (D) can be measured by an ethylene content quantification method (IR method) described on pages 412 to 413 of Polymer Analysis Handbook (May 10, 2013, 3rd printing) edited by the Polymers Analysis Committee of the Japan Society of Analytical Chemistry.

### [Titanium oxide (E)]

Titanium oxide (E) is, for example, in a particulate form and is dispersed in the heat seal layer. The average particle size of titanium oxide may be 0.10 µm to 0.50 µm or may be 0.15 µm to 0.40 µm or 0.20 µm to 0.30 µm. The average particle size of titanium oxide is a value measured by a laser diffraction-scattering method.

Thus, each component included in the concealing layer has been described; however, the concealing layer may contain components other than the propylene-ethylene block copolymer resin (C), the ethylene-propylene copolymer elastomer (D), and titanium oxide (E). However, from the viewpoint of using a mono-material packaging material composed of the same polypropylene-based material, the propylene content in the concealing layer is preferably 70% by mass or more. The propylene content in the concealing layer can be measured by Raman spectroscopy.

From the viewpoint of having more excellent heat resistance, the content of the propylene-ethylene block copolymer resin (C) in the concealing layer may be 35% by mass or more, 50% by mass or more, or 60% by mass or more, based on the total mass of the concealing layer. From the viewpoint of having more excellent cold impact resistance, the content of the propylene-ethylene block copolymer resin (C) in the concealing layer may be 90% by mass or less, 80% by mass or less, or 70% by mass or less, based on the total mass of the concealing layer. From these viewpoints, the content of the propylene-ethylene block copolymer resin (C) in the concealing layer may be 35% to 90% by mass, or may be 50% to 80% by mass, 50% to 70% by mass, or 60% to 80% by mass, based on the total mass of the concealing layer.

From the viewpoint of having more excellent cold impact resistance, the content of the ethylene-propylene copolymer elastomer (D) in the concealing layer may be 10% by mass or more, 15% by mass or more, or 20% by mass or more, based on the total mass of the concealing layer. From the viewpoint of having more excellent heat resistance, the content of the ethylene-propylene copolymer elastomer (D) in the concealing layer may be 50% by mass or less, 40% by mass or less, or 30% by mass or less, based on the total mass of the concealing layer. From these viewpoints, the content of the ethylene-propylene copolymer elastomer (D) in the concealing layer may be 10% to 50% by mass, or may be 10% to 40% by mass, 15% to 40% by mass, or 20% to 30% by mass, based on the total mass of the concealing layer.

From the viewpoint of having more excellent heat resistance and cold impact resistance, the mass ratio of the content of the ethylene-propylene copolymer elastomer (D) with respect to the content of the propylene-ethylene block copolymer resin (C) [(D)/(C)] in the concealing layer is preferably 0.10 to 1.00. From the viewpoint of having more excellent cold impact resistance, the mass ratio [(D)/(C)] may be 0.20 or greater, 0.30 or greater, or 0.40 or greater. From the viewpoint of having more excellent heat resistance, the mass ratio [(D)/(C)] may be 0.80 or less, 0.60 or less, or 0.40 or less.

The content of titanium oxide (E) in the concealing layer is 0.10% to 30.00% by mass. From the viewpoint of having more excellent concealing properties, the content of titanium oxide (E) in the concealing layer may be 1.00% by mass or more, 5.00% by mass or more, 7.00% by mass or more, or 10.00% by mass or more, based on the total mass of the concealing layer. From the viewpoint of having more excellent cold impact resistance, the content of titanium oxide (E) in the concealing layer may be 23.00% by mass or less, 20.00% by mass or less, 15.00% by mass or less, 12.00% by mass or less, or 8.00% by mass or less, based on the total mass of the concealing layer.

### (Laminate layer)

The laminate layer is a layer having laminate properties with respect to a base material or the like. The laminate layer contains the propylene homopolymer (A) and/or the propylene-based copolymer resin (B) mentioned with regard to the heat seal layer. By providing the laminate layer, it is easy to suppress distortion and curling of the multilayer film.

The blending ratio of the propylene homopolymer (A) and the propylene-based copolymer resin (B) in the laminate layer is not particularly limited; however, from the viewpoint of suppressing film curling after film molding, it is preferable that the laminate layer has the same blending ratio as that of the heat seal layer. That is, it is preferable that the content of the propylene homopolymer (A) in the laminate layer is 10% to 70% by mass based on the total mass of the laminate layer, and the content of the propylene-based copolymer resin (B) in the laminate layer is 30% to 90% by mass based on the total mass of the laminate layer. Other features of the laminate layer may be the same as those of the above-mentioned heat seal layer. For example, the melting point of the propylene-based copolymer resin (B) included in the laminate layer may be 132°C to 150°C. Furthermore, for example, the propylene content in the laminate layer may be 70% by mass or more. The propylene content in the laminate layer can be measured by Raman spectroscopy.

### (Thickness of layer)

The thickness of the multilayer film is not particularly limited as long as the thickness is, for example, within a range that allows use as a film for a packaging material; however, when the film is too thick, it is disadvantageous in terms of cost. For this reason, the thickness of the multilayer film may be 100 µm or less (for example, 50 µm to 100 µm), or may be 70 µm or less (for example, 50 µm to 70 µm).

The thickness of the heat seal layer may be 8% to 30% based on the thickness of the multilayer film. When the ratio of the thickness of the heat seal layer is equal to or greater than the above-described lower limit value, more excellent cold impact resistance is likely to be obtained. Furthermore, when the ratio of the thickness of the heat seal layer is equal to or less than the above-described upper limit value, more excellent low-temperature sealability is likely to be obtained. From these viewpoints, the thickness of the heat seal layer may be 8% to 25%, 10% to 25%, 8% to 21%, or 10% to 21%, based on the thickness of the multilayer film. The thickness of the heat seal layer may be, for example, 5 µm to 20 µm.

From the viewpoint of achieving the concealing properties and the cold impact resistance in a more well-balanced manner, the thickness may be 20 µm or greater. From this viewpoint, the thickness of the concealing layer may be 25 µm or greater, 30 µm or greater, 35 µm or greater, or 40 µm or greater. The upper limit value of the thickness of the concealing layer is not particularly limited; however, since it is disadvantageous in terms of cost, the thickness can be set to 60 µm or less or 50 µm or less.

From the viewpoint of achieving the concealing properties and the cold impact resistance in a more well-balanced manner, the thickness of the concealing layer may be 50% to 92% based on the thickness of the multilayer film. The thickness of the concealing layer may be 58% or greater, 60% or greater, 65% or greater, 70% or greater, 75% or greater, or 79% or greater, or may be 90% or less, 84% or less, 80% or less, or 85% or less, based on the thickness of the multilayer film.

When the laminate layer is provided, the total thickness of the heat seal layer and the laminate layer may be 16% or greater, 20% or greater, or 25% or greater, and may be 42% or less, 40% or less, or 35% or less, based on the thickness of the multilayer film. When the proportion of the total thickness of the heat seal layer and the laminate layer is equal to or greater than the above-described lower limit value, more excellent cold impact resistance is likely to be obtained. Furthermore, when the proportion of the total thickness of the heat seal layer and the laminate layer is equal to or less than the above-described upper limit value, more excellent low-temperature sealability is likely to be obtained. From these viewpoints, the total thickness of the heat seal layer and the laminate layer may be 16% to 42%, 20% to 40%, or 25% to 35%, based on the thickness of the multilayer film. The total thickness of the heat seal layer and the laminate layer may be, for example, 10 µm to 40 µm.

The method for producing the above-described multilayer film is not particularly limited, and any known method can be used. Examples of a method for thermoforming processing include a melt-kneading method using a general mixing machine such as a single-screw extruder, a twin-screw extruder, or a multi-screw extruder; and a method of dissolving or dispersing and mixing each component and then removing the solvent by heating. When workability is taken into consideration, a single-screw extruder or a twin-screw extruder can be used. When a single-screw extruder is used, examples of the screw include a full flight screw, a screw having a mixing element, a barrier flight screw, and a fluted screw, and these can be used without any particular limitations. As a twin-screw kneading device, a co-rotating twin-screw extruder, a counter-rotating twin-screw extruder, or the like can be used, and as the screw shape, a full flight screw, a kneading disc type screw, or the like can be used without any particular limitations.

With regard to the above-described method, a method of melting a multilayer film using a single-screw extruder, a twin-screw extruder, or the like and then forming a film with a T-die using a feed block or a multimanifold, can be used.

The obtained multilayer film may be appropriately subjected to a surface modification treatment that improves the suitability for subsequent processes as necessary. For example, in order to improve printing suitability when used as a single film, or to improve lamination suitability when used in a laminated form, the printing surface or the surface that comes into contact with the base material may be subjected to a surface modification treatment. Examples of the surface modification treatment include treatments that generate functional groups by oxidizing the film surface, such as a corona discharge treatment, a plasma treatment, and a flame treatment; and a modification treatment by a wet process that forms an easily adhesive layer by coating.

Thus, the multilayer film of the present disclosure has been described; however, the multilayer film of the present disclosure is not limited to the above-described embodiments. For example, the multilayer film may include layers other than a heat seal layer, a concealing layer, and a laminate layer. However, from the viewpoint of using the multilayer film as a mono-material packaging material composed of the same polypropylene-based material, and from the viewpoint of obtaining more excellent low-temperature sealability, the propylene content (based on the total mass of the multilayer film) in the multilayer film is preferably set to 70% by mass or more. The propylene content in the multilayer film can be measured by Raman spectroscopy.

### <Packaging material>

Another embodiment of the present disclosure relates to a packaging material including a multilayer film. The multilayer film used in the packaging material includes a heat seal layer and a concealing layer provided on the heat seal layer, in which the heat seal layer contains a propylene homopolymer (A) and/or a propylene-based copolymer resin (B), the concealing layer contains a propylene-ethylene block copolymer resin (C), an ethylene-propylene copolymer elastomer (D), and titanium oxide (E), and the content of titanium oxide (E) in the concealing layer may be 0.10% to 30.00% by mass based on the total mass of the concealing layer. This multilayer film may be the multilayer film of the above-described embodiment. The packaging material may be composed only of a multilayer film, or may include a multilayer film and a base material.

The packaging material including a multilayer film and a base material can be obtained by laminating a multilayer film with at least one layer of base material such as a biaxially stretched polyamide film (ONy), a biaxially stretched polyester film (PET), a biaxially stretched polypropylene film (OPP), a printed paper, a metal foil (AL foil), or a transparent vapor deposited film, and forming a laminated body. The base material may be disposed on the opposite side of the heat seal layer side as viewed from the concealing layer of the multilayer film. From the viewpoint of preparing the packaging material as a mono-material packaging material (single-material packaging material), it is preferable to use a biaxially stretched polypropylene film (OPP) as the base material. In other words, the packaging material may be a single-material packaging material including a biaxially stretched polypropylene film and a multilayer film. Conventionally, in a case where concealing properties are imparted to a packaging material, an aluminum base material or the like is used; however, since the packaging material of the present embodiment includes the above-described multilayer film, the packaging material has sufficient concealing properties even without using a base material having concealing properties, such as an aluminum base material.

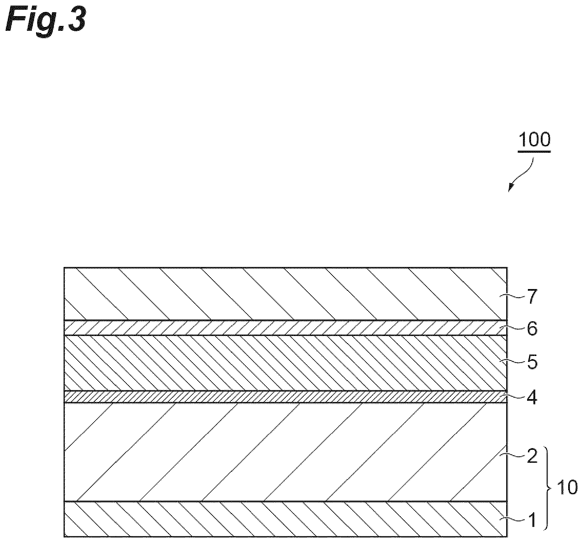

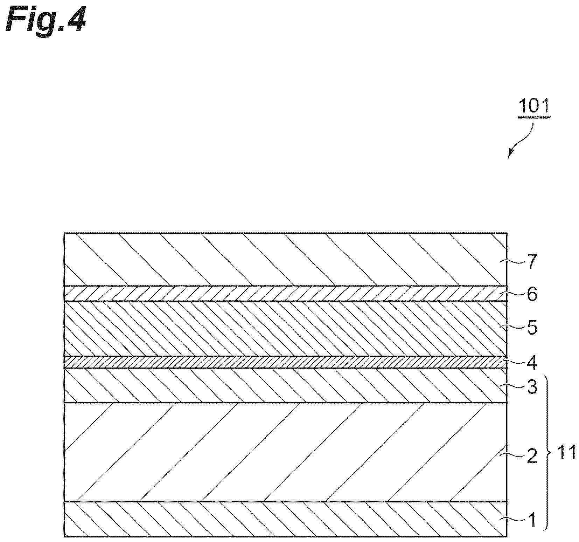

When the packaging material is a laminated body, the layer configuration is not particularly limited and can be appropriately adjusted according to the required characteristics of the package, for example, barrier properties that satisfy the shelf life of packaged food, size and impact resistance that can cope with the weight of contents, visibility of the contents, and the like. The packaging material may be, for example, a laminated body shown in FIG. 3. The packaging material 100 shown in the same figure includes a multilayer film 10, an adhesive layer 4, a transparent vapor deposited film 5, an adhesive layer 6, and a base material (base material film) 7 in this order. The multilayer film 10 includes, from the outer layer side of the packaging material 100, a heat seal layer 1 and a concealing layer 2 in this order. That is, the concealing layer 2 is located on the inner layer side of the heat seal layer 1. The packaging material may be, for example, a laminated body shown in FIG. 4. The packaging material 101 shown in the same figure includes a multilayer film 11, an adhesive layer 4, a transparent vapor deposited film 5, an adhesive layer 6, and a base material (base material film) 7 in this order. The multilayer film 11 includes, from the outer layer side of the packaging material 101, a heat seal layer 1, a concealing layer 2, and a laminate layer 3 in this order. That is, the concealing layer 2 and the laminate layer 3 are located on the inner layer side of the heat seal layer 1. These packaging materials (100, 101) are used such that the multilayer film (10, 11) side faces the contents.

Regarding a method for producing the packaging materials (100, 101), a conventional dry lamination method of bonding the films constituting the packaging materials (100, 101) together using an adhesive can be suitably employed; however, a method of subjecting a multilayer film to direct extrusion lamination on a base material can also be employed as necessary.

### <Package>

Another embodiment of the present disclosure relates to a package produced into a bag from a packaging material. The packaging material used for the package includes, as a multilayer film, a multilayer film including a heat seal layer and a concealing layer provided on the heat seal layer, in which the heat seal layer contains a propylene homopolymer (A) and/or a propylene-based copolymer resin (B), the concealing layer contains a propylene-ethylene block copolymer resin (C), an ethylene-propylene copolymer elastomer (D), and titanium oxide (E), and the content of titanium oxide (E) in the concealing layer is 0.10% to 30.00% by mass based on the total mass of the concealing layer. This packaging material may be the packaging material of the above-described embodiment.

There is no particular limitation on the bag-making style of the package. The package may be, for example, a flat bag, a three-sided bag, a folded bag, a gusset bag, a standing pouch, a spouted pouch, a beaked pouch, or the like, all of which use the above-described multilayer film of the packaging material as a sealing material.

### Examples

Hereinafter, the contents of the present disclosure will be described in more detail using Examples and Comparative Examples; however, the present disclosure is not intended to be limited to the following Examples.

### <Preparation of materials>

A propylene homopolymer (A), propylene-based copolymer resins (B), a propylene-ethylene block copolymer resin (C), and an ethylene-propylene copolymer elastomer (D) shown below were prepared. The melting start temperature and the melting point of the materials shown below are values determined by performing differential scanning calorimetry according to JIS K 7121. Furthermore, the melt flow rate is a value measured according to ISO 1133 under the conditions of a temperature of 230°C and a load of 2.16 kg. Furthermore, measurement of the ethylene content was performed according to the ethylene content quantification method (IR method) described on pages 412 to 413 of Polymer Analysis Handbook (May 10, 2013, 3rd printing) edited by the Polymers Analysis Committee of the Japan Society of Analytical Chemistry. Measurement of the propylene content of the materials shown below was performed according to Raman spectroscopy.

### (Propylene homopolymer (A))

· Resin (A): A propylene homopolymer having a melting start temperature of 153°C, a melting point (melting peak temperature) of 159°C, and a melt flow rate of 3.0 g/10 minutes.

### (Propylene-based copolymer resin (B))

· Resin (B1): A propylene-ethylene random copolymer having a melting start temperature of 142°C, a melting point (melting peak temperature) of 147°C, a melt flow rate of 7.5 g/10 minutes, and an ethylene content of 3.4% by mass.
· Resin (B2): A propylene-ethylene random copolymer having a melting start temperature of 122°C, a melting point (melting peak temperature) of 133°C, a melt flow rate of 7.0 g/10 minutes, and an ethylene content of 5.8% by mass.
· Resin (B3): A propylene-ethylene random copolymer having a melting start temperature of 120°C, a melting point (melting peak temperature) of 131°C, a melt flow rate of 6.5 g/10 minutes, and an ethylene content of 23.7% by mass.

### (Propylene-ethylene block copolymer resin (C))

· Resin (C): A propylene-ethylene block copolymer resin having a melt flow rate of 1.8 g/10 minutes, containing 81.5% by mass of a propylene homopolymer component (c1) and 18.5% by mass of an ethylene-propylene copolymer component (c2), and having an ethylene content included in the ethylene-propylene copolymer component (c2) of 36.2% by mass.

### (Ethylene-propylene copolymer elastomer (D))

· Elastomer (D): An ethylene-propylene copolymer elastomer having a melt flow rate of 0.6 g/10 minutes and a mass ratio of a propylene content with respect to an ethylene content [propylene content/ethylene content] of 2.7.

### (Titanium oxide (E))

Titanium oxide manufactured by DIC Corporation, PEONY HP WHITE Series, product No. L-11232-MPT

### <Example 1>

### (Production of laminated film)

For forming a heat seal layer, 50% by mass of the resin (A), which is the propylene homopolymer (A), and 50% by mass of the resin (B1), which is the propylene-based copolymer resin (B), were mixed in a pellet state to prepare a mixture (I). Furthermore, for forming a concealing layer, the resin (C), which is the propylene-ethylene block copolymer resin (C), and the elastomer (D), which is the ethylene-propylene copolymer elastomer (D), were mixed in a pellet state such that the mass ratio of the elastomer (D) with respect to the resin (C) (ratio [elastomer (D)/resin (C)]) was 0.20, to prepare a mixture (II), and the mixture (II) and titanium oxide (E) were mixed such that the content of titanium oxide (E) in the whole was 11.25% by mass, to prepare a mixture (III).

The above-described mixture (I) and mixture (III) were fed into an extruder whose temperature was adjusted to 250°C, and the mixtures were kneaded in a molten state and laminated in a T-die extruder having a feed block such that the heat seal layer had a thickness of 15 µm and the concealing layer had a thickness of 45 µm, to produce a film of Example 1. The propylene content in the heat seal layer and the propylene content in the concealing layer in the obtained film are both 70% by mass or more.

### <Examples 2 to 4>

Films of Examples 2 to 4 were each produced in the same manner as in Example 1, except that the mixing proportions of the resin (A) and the resin (B1) in the mixture (I) were changed as shown in Table 1. The propylene content in the heat seal layer and the propylene content in the concealing layer in the obtained films are both 70% by mass or more.

### <Example 5>

A film of Example 5 was produced in the same manner as in Example 1, except that the mixing proportions of the resin (C) and the elastomer (D) in the mixture (II) (ratio [elastomer (D)/resin (C)]) were changed as shown in Table 1. The propylene content in the heat seal layer and the propylene content in the concealing layer in the obtained film are both 70% by mass or more.

### <Examples 6 and 7>

Films of Examples 6 and 7 were each produced in the same manner as in Example 5, except that the mixing proportions of the titanium oxide (E) in the mixture (III) were changed as shown in Table 1. The propylene content in the heat seal layer and the propylene content in the concealing layer in the obtained films are both 70% by mass or more.

### <Example 8>

A film of Example 8 was produced in the same manner as in Example 1, except that the resin (B2) was used instead of the resin (B1). The propylene content in the heat seal layer and the propylene content in the concealing layer in the obtained film are both 70% by mass or more.

### <Examples 9 and 10>

Films of Examples 9 and 10 were each produced in the same manner as in Example 8, except that the mixing proportions of the resin (A) and the resin (B2) in the mixture (I) were changed as shown in Table 2. The propylene content in the heat seal layer and the propylene content in the concealing layer in the obtained films are both 70% by mass or more.

### <Example 11>

A film of Example 11 was produced in the same manner as in Example 1, except that the heat seal layer was formed using the resin (A) alone instead of the mixture (I) (that is, the resin (B1) was not used). The propylene content in the heat seal layer and the propylene content in the concealing layer in the obtained film are both 70% by mass or more.

### <Example 12>

A film of Example 12 was produced in the same manner as in Example 1, except that the heat seal layer was formed using the resin (B1) alone instead of the mixture (I) (that is, the resin (A) was not used). The propylene content in the heat seal layer and the propylene content in the concealing layer in the obtained film are both 70% by mass or more.

### <Example 13>

A film of Example 13 was produced in the same manner as in Example 3, except that the resin (B3) was used instead of the resin (B1). The propylene content in the heat seal layer and the propylene content in the concealing layer in the obtained film are both 70% by mass or more.

### <Example 14>

A film of Example 14 was produced in the same manner as in Example 1, except that the layer thicknesses of the heat seal layer and the concealing layer were changed as shown in Table 2. The propylene content in the heat seal layer and the propylene content in the concealing layer in the obtained film are both 70% by mass or more.

### <Comparative Example 1>

A film of Comparative Example 1 was produced in the same manner as in Example 1, except that the mixture (III) was prepared using the resin (C) instead of the mixture (II) (that is, the elastomer (D) was not used).

### <Comparative Example 2>

A film of Comparative Example 2 was produced in the same manner as in Example 1, except that the concealing layer was formed using the mixture (II) instead of the mixture (III) (that is, the titanium oxide (E) was not used).

### <Example 15>

A mixture (I) was prepared for forming the heat seal layer, and a mixture (III) was prepared for forming the concealing layer, in the same manner as in Example 1. Furthermore, a mixture (IV) having the same composition as that of the mixture (I) for forming the heat seal layer was prepared for forming a laminate layer.

The above-described mixture (I), mixture (III), and mixture (IV) were supplied to an extruder whose temperature was adjusted to 250°C and kneaded in a molten state, and a heat seal layer, a laminate layer, and a concealing layer were laminated in a T-die extruder having a feed block such that the thicknesses of the heat seal layer and the laminate layer were each 10 µm, and the thickness of the concealing layer was 40 µm, to produce a film of Example 15. The propylene content in the heat seal layer, the propylene content in the concealing layer, and the propylene content in the laminate layer in the obtained film are all 70% by mass or more.

### <Examples 16, 17, 23, and 24>

Films of Examples 16, 17, 23, and 24 were each produced in the same manner as in Example 15, except that the mixing proportions of the resin (A) and the resin (B1) in the mixture (I) and the mixture (IV) were changed as shown in Table 3. The propylene content in the heat seal layer, the propylene content in the concealing layer, and the propylene content in the laminate layer in the obtained films are all 70% by mass or more.

### <Example 18>

A film of Example 18 was produced in the same manner as in Example 15, except that the mixing proportions of the resin (C) and the elastomer (D) in the mixture (II) (ratio [elastomer (D)/resin (C)]) were changed as shown in Table 3. The propylene content in the heat seal layer, the propylene content in the concealing layer, and the propylene content in the laminate layer in the obtained films are all 70% by mass or more.

### <Examples 19 to 22 and Comparative Example 3>

Films of Examples 19 to 22 and Comparative Example 3 were each produced in the same manner as in Example 18, except that the mixing proportion of the titanium oxide (E) in the mixture (III) was changed as shown in Table 3. The propylene content in the heat seal layer, the propylene content in the concealing layer, and the propylene content in the laminate layer in the obtained films are all 70% by mass or more.

### <Various evaluations>

The film obtained in each example was subjected to the following evaluations. The results are shown in Tables 1 to 3.

### [Evaluation of cold impact resistance]

Using a film impact tester manufactured by Toyo Seiki Seisakusho, Ltd., the impact strength of the film obtained in each example was measured under the conditions of a temperature of -5°C, a loading of 1.5 J, and a bullet size of 1/2 inches. When the impact strength (film impact) was 6.00 J/mm or greater, it was determined that the cold impact resistance was excellent.

### [Concealing properties]

The concealing properties of the film obtained in each example were evaluated using a portable transmission densitometer (product No. 341C) manufactured by X-Rite, Incorporated. When the measured transmission density was 0.20 or greater, it was determined that sufficient concealing properties were obtained.

### [Evaluation of low-temperature sealability]

A biaxially stretched polyester film (PET) having a thickness of 12 µm, an AL foil having a thickness of 9 µm, a biaxially stretched polyamide film (ONy) having a thickness of 15 µm, and the film (polypropylene-based film) obtained in each example were bonded together by a conventional dry lamination method using a urethane-based adhesive, and a laminated body having the following configuration was produced.
Laminated body configuration: PET/adhesive/AL foil/adhesive/ONy/adhesive/polypropylene-based film

The film of each example was adhered to ONy such that the heat seal layer came on the outer layer side (outermost layer of the laminated body).

Two sheets of the laminated body obtained as described above were prepared, and the polypropylene-based films of these laminated bodies were heat-sealed together using a heat sealer manufactured by TESTER SANGYO CO., LTD., under the conditions of a sealing pressure of 0.2 MPa, a sealing time of 1 second, and a sealing width of 5 mm, at a sealing temperature between 140°C to 160°C with an increment of 5°C. After heat-sealing at each temperature, the sealed portion was cut into a size of 15 mm in width × 80 mm, and the heat seal strength was measured using a tensile tester manufactured by SHIMADZU CORPORATION under the conditions of a tensile speed of 300 mm/min. As the temperature at which the heat seal strength reached 40 N/15 mm or greater (sealing temperature) was lower, it was determined that the low-temperature sealability was more satisfactory. The sealing temperatures shown in Tables 1 to 3 are temperatures at which the heat seal strength reached 40 N/15 mm or greater.

### [Evaluation of heat resistance]

A bag having a size of 130 mm × 180 mm was produced using the film obtained in each example, the inner surfaces of the bag were adhered together without any contents inside, and a retort treatment was performed at 135°C for 40 minutes. Thereafter, the seal parts on three sides were cut, the films were peeled by hand, and an evaluation of fusion after retorting was performed. A case where film peeling was easy was rated as A, a case where a tacky feeling was felt was rated as B, and a case where the film was deformed when peeled was rated as C.

**[Table 1]**

| | | | Example 1 | Example 2 | Example 3 | Example 4 | Example 5 | Example 6 | Example 7 |
|---|---|---|---|---|---|---|---|---|---|
| Thickness | Total | (µm) | 60 | 60 | 60 | 60 | 60 | 60 | 60 |
| | Heat seal layer | (µm) | 15 | 15 | 15 | 15 | 15 | 15 | 15 |
| | Concealing layer | (µm) | 45 | 45 | 45 | 45 | 45 | 45 | 45 |
| Seal layer configuration | Resin (A) | (% by mass) | 50 | 80 | 70 | 10 | 50 | 50 | 50 |
| | Resin (B1) | (% by mass) | 50 | 20 | 30 | 90 | 50 | 50 | 50 |
| | Resin (B)/resin (A) | - | 1.00 | 0.25 | 0.43 | 9.00 | 1.00 | 1.00 | 1.00 |
| Concealing layer configuration | Resin (C) | (% by mass) | 73.96 | 73.96 | 73.96 | 73.96 | 59.97 | 62.50 | 57.43 |
| | Elastomer (D) | (% by mass) | 14.79 | 14.79 | 14.79 | 14.79 | 28.78 | 30.00 | 27.57 |
| | Elastomer (D)/resin (C) | - | 0.20 | 0.20 | 0.20 | 0.20 | 0.48 | 0.48 | 0.48 |
| | Titanium oxide (E) | (% by mass) | 11.25 | 11.25 | 11.25 | 11.25 | 11.25 | 7.5 | 15 |
| Cold impact resistance (film impact (-5°C)) | | (J/mm) | 9.62 | 7.46 | 9.32 | 8.74 | 10.26 | 10.5 | 9.71 |
| Concealing properties (transmission density) | | - | 0.45 | 0.45 | 0.45 | 0.45 | 0.45 | 0.37 | 0.51 |
| Low-temperature sealability (seal strength) | | (°C) | 150 | 160 | 150 | 150 | 150 | 150 | 150 |
| Heat resistance | | - | A | A | A | A | A | A | A |

**[Table 2]**

| | | | Example 8 | Example 9 | Example 10 | Example 11 | Example 12 | Example 13 | Example 14 | Comparative Example 1 | Comparative Example 2 |
|---|---|---|---|---|---|---|---|---|---|---|---|
| Thickness | Total | (µm) | 60 | 60 | 60 | 60 | 60 | 60 | 60 | 60 | 60 |
| | Heat seal layer | (µm) | 15 | 15 | 15 | 15 | 15 | 15 | 10 | 15 | 15 |
| | Concealing layer | (µm) | 45 | 45 | 45 | 45 | 45 | 45 | 50 | 45 | 45 |
| Seal layer configuration | Resin (A) | (% by mass) | 50 | 70 | 10 | 100 | - | 70 | 50 | 50 | 50 |
| | Resin (B1) | (% by mass) | - | - | - | - | 100 | - | 50 | 50 | 50 |
| | Resin (B2) | (% by mass) | 50 | 30 | 90 | - | - | - | - | - | - |
| | Resin (B3) | (% by mass) | - | - | - | - | - | 30 | - | - | - |
| | Resin (B)/resin (A) | - | 1.00 | 0.43 | 9.00 | - | - | 0.43 | 1.00 | 1.00 | 1.00 |
| Concealing layer configuration | Resin (C) | (% by mass) | 73.96 | 73.96 | 73.96 | 73.96 | 73.96 | 73.96 | 73.96 | 88.75 | 83.33 |
| | Elastomer (D) | (% by mass) | 14.79 | 14.79 | 14.79 | 14.79 | 14.79 | 14.79 | 14.79 | 0 | 16.67 |
| | Elastomer (D)/resin (C) | - | 0.20 | 0.20 | 0.20 | 0.20 | 0.20 | 0.20 | 0.20 | 0 | 0.20 |
| | Titanium oxide (E) | (% by mass) | 11.25 | 11.25 | 11.25 | 11.25 | 11.25 | 11.25 | 11.25 | 11.25 | 0 |
| Cold impact resistance (film impact (-5°C)) | | (J/mm) | 8.82 | 7.45 | 10.64 | 7.31 | 8.09 | 6.87 | 10.55 | 2.48 | 9.78 |
| Concealing properties (transmission density) | | - | 0.45 | 0.45 | 0.45 | 0.45 | 0.45 | 0.45 | 0.49 | 0.45 | 0 |
| Low-temperature sealability (seal strength) | | (°C) | 150 | 150 | 140 | 160 | 145 | 145 | 150 | 150 | 150 |
| Heat resistance | | - | A | A | C | A | B | B | A | A | A |

**[Table 3]**

| | | | Example 15 | Example 16 | Example 17 | Example 18 | Example 19 | Example 20 | Example 21 | Example 22 | Example 23 | Example 24 | Comparative Example 3 |
|---|---|---|---|---|---|---|---|---|---|---|---|---|---|
| Thickness | Total | (µm) | 60 | 60 | 60 | 60 | 60 | 60 | 60 | 60 | 60 | 60 | 60 |
| | Heat seal layer | (µm) | 10 | 10 | 10 | 10 | 10 | 10 | 10 | 10 | 10 | 10 | 10 |
| | Concealing layer | (µm) | 40 | 40 | 40 | 40 | 40 | 40 | 40 | 40 | 40 | 40 | 40 |
| | Laminate layer | (µm) | 10 | 10 | 10 | 10 | 10 | 10 | 10 | 10 | 10 | 10 | 10 |
| Seal layer configuration | Resin (A) | (% by mass) | 50 | 70 | 30 | 50 | 50 | 50 | 50 | 50 | 20 | 10 | 50 |
| | Resin (B1) | (% by mass) | 50 | 30 | 70 | 50 | 50 | 50 | 50 | 50 | 80 | 90 | 50 |
| | Resin (B)/resin (A) | - | 1.00 | 0.43 | 2.33 | 1.00 | 1.00 | 1.00 | 1.00 | 1.00 | 4.00 | 9.00 | 1.00 |
| Concealing layer configuration | Resin (C) | (% by mass) | 73.96 | 73.96 | 73.96 | 59.97 | 62.50 | 57.43 | 52.36 | 47.30 | 73.96 | 73.96 | 42.23 |
| | Elastomer (D) | (% by mass) | 14.79 | 14.79 | 14.79 | 28.78 | 30.00 | 27.57 | 25.14 | 22.70 | 14.79 | 14.79 | 20.27 |
| | Elastomer (D)/resin (C) | - | 0.20 | 0.20 | 0.20 | 0.48 | 0.48 | 0.48 | 0.48 | 0.48 | 0.20 | 0.20 | 0.48 |
| | Titanium oxide (E) | (% by mass) | 11.25 | 11.25 | 11.25 | 11.25 | 7.5 | 15 | 22.5 | 30 | 11.25 | 11.25 | 37.5 |
| Laminate layer configuration | Resin (A) | (% by mass) | 50 | 70 | 30 | 50 | 50 | 50 | 50 | 50 | 20 | 10 | 50 |
| | Resin (B1) | (% by mass) | 50 | 30 | 70 | 50 | 50 | 50 | 50 | 50 | 80 | 90 | 50 |
| Cold impact resistance (film impact (-5°C)) | | (J/mm) | 9.56 | 9.32 | 8.77 | 11.22 | 11.48 | 10.61 | 8.25 | 6.33 | 9.47 | 10.12 | 3.79 |
| Concealing properties (transmission density) | | - | 0.40 | 0.40 | 0.40 | 0.40 | 0.33 | 0.45 | 0.65 | 0.72 | 0.39 | 0.41 | 0.82 |
| Low-temperature sealability (seal strength) | | (°C) | 150 | 150 | 150 | 150 | 150 | 150 | 150 | 150 | 150 | 150 | 150 |
| Heat resistance | | - | A | A | A | A | A | A | A | A | A | A | A |

### Reference Signs List

1: heat seal layer, 2: concealing layer, 3: laminate layer, 4: adhesive layer, 5: transparent vapor deposited film, 6: adhesive layer, 7: base material film, 10, 11: multilayer film, 100, 101: packaging material.

## Claims

1. A multilayer film comprising:
a heat seal layer; and
a concealing layer provided on the heat seal layer,
wherein the heat seal layer comprises a propylene homopolymer (A) and/or a propylene-based copolymer resin (B),
the concealing layer comprises a propylene-ethylene block copolymer resin (C), an ethylene-propylene copolymer elastomer (D), and titanium oxide (E), and
a content of the titanium oxide (E) in the concealing layer is 0.10% to 30.00% by mass based on a total mass of the concealing layer.

2. The multilayer film according to claim 1,
wherein the heat seal layer comprises a propylene-based copolymer resin (B), and
the propylene-based copolymer resin (B) has a melting point of 132°C to 150°C.

3. The multilayer film according to claim 1,
wherein the heat seal layer comprises a propylene-based copolymer resin (B), and
an ethylene content in the propylene-based copolymer resin (B) is 3.0% to 6.0% by mass based on a total mass of the propylene-based copolymer resin (B).

4. The multilayer film according to any one of claims 1 to 3,
wherein a content of the propylene homopolymer (A) in the heat seal layer is 10% to 70% by mass based on a total mass of the heat seal layer, and
a content of the propylene-based copolymer resin (B) in the heat seal layer is 30% to 90% by mass based on the total mass of the heat seal layer.

5. The multilayer film according to any one of claims 1 to 3,
wherein a mass ratio of a content of the propylene-based copolymer resin (B) with respect to a content of the propylene homopolymer (A) in the heat seal layer is 0.10 to 9.00.

6. The multilayer film according to any one of claims 1 to 3,
wherein a content of the propylene-ethylene block copolymer resin (C) in the concealing layer is 35% to 90% by mass based on a total mass of the concealing layer, and
a content of the ethylene-propylene copolymer elastomer (D) in the concealing layer is 10% to 50% by mass based on the total mass of the concealing layer.

7. The multilayer film according to any one of claims 1 to 3,
wherein a mass ratio of a content of the ethylene-propylene copolymer elastomer (D) with respect to a content of the propylene-ethylene block copolymer resin (C) in the concealing layer is 0.10 to 1.00.

8. The multilayer film according to any one of claims 1 to 3,
wherein a propylene content is 70% by mass or more based on a total mass of the multilayer film.

9. The multilayer film according to any one of claims 1 to 3,
wherein a thickness of the heat seal layer is 8% to 30% based on a thickness of the multilayer film.

10. The multilayer film according to any one of claims 1 to 3,
wherein a thickness of the concealing layer is 20 µm or more.

11. The multilayer film according to any one of claims 1 to 3,
wherein the multilayer film comprises the heat seal layer, the concealing layer, and a laminate layer in this order, and
the laminate layer comprises a propylene homopolymer (A) and/or a propylene-based copolymer resin (B).

12. The multilayer film according to claim 11,
wherein a total thickness of the heat seal layer and the laminate layer is 16% to 42% based on a thickness of the multilayer film.

13. A packaging material comprising the multilayer film according to any one of claims 1 to 3.

14. The packaging material according to claim 13, further comprising a biaxially stretched polypropylene film on an opposite side of the heat seal layer side as viewed from the concealing layer of the multilayer film.

15. A package produced into a bag from the packaging material according to claim 14.
